# EUROPÄISCHE PATENTANMELDUNG

(11) **EP 1 367 512 A2**
(43) Veröffentlichungstag der Anmeldung: **03.12.2003**
(21) Anmeldenummer: 02016133.7
(22) Anmeldetag: 19.07.2002
(51) Int. Cl.: G06F 17/60

(54) **Rabattsystem**

(30) Priorität: 31.05.2002 DE 10224159
(71) Anmelder: Sportfive GmbH, 20459 Hamburg (DE)
(72) Erfinder: Reckwitz, Lars P., 45468 Mühlheim/Ruhr (DE)
(74) Vertreter: Zipse + Habersack

(57) **Zusammenfassung**

Die vorliegende Erfindung betrifft ein Verfahren zur Auskehrung von Rabatten an Verbraucher ein Rabattsystem, welches Containerpartner umfasst, die Produkte und Dienstleistungen bewerben und Containerpartner, die Rabatte auf ihre Produkte und Dienstleistungen auskehren, wobei sich diese Gruppen überschneiden können. Weiterhin umfasst das Rabattsystem angemeldete Teilnehmer, die das Rabattsystem unter Nutzung von identifikationsdaten nutzen. Basis des vorliegenden Rabattsystems ist ein rechnerbasiertes Zentralsystem, welches die Daten der Containerpartner und/oder der Teilnehmer verarbeitet, die an dem Rabattsystem teilnehmen. Hierbei wird jedem Teilnehmer im Zentralsystem eine Teilnehmerkennung und ein Teilnehmerkonto zugeordnet, das rabattrelevante Daten und persönliche Daten des Teilnehmers enthält. Die Datenübertragung zwischen den Teilnehmern, den Containerpartnern und dem Zentralsystem kann über herkömmliche Kommunikationsformen wie Kommunikationsleitungen oder Datenleitungen bzw. Funkübertragungsnetze und korrespondierende Kommunikationsplattformen wie zum Beispiel dem Internet stattfinden.

## Beschreibung

Die vorliegende Erfindung betrifft ein Verfahren zur Auskehrung von Rabatten an Verbraucher kurz: Rabattsystem, welches Rabattsystem Containerpartner umfasst, die Produkte und Dienstleistungen bewerben und Containerpartner, die Rabatte auf ihre Produkte und Dienstleistungen auskehren, wobei sich diese Gruppen überschneiden können. Weiterhin umfasst das Rabattsystem angemeldete Teilnehmer, die das Rabattsystem unter Nutzung von Identifikationsdaten nutzen.

Derartige Rabattsysteme sind insbesondere bei Fluggesellschaften bekannt. Jeder Teilnehmer erhält dort eine Identifikationskarte, wobei der Teilnehmer beim Wahrnehmen einer Dienstleistung Bonuspunkte auf seinem Teilnehmerkonto gutgeschrieben bekommt, die er dann zum Beispiel als Flugmeilen, d.h. in Form von weiteren Dienstleistungen erstattet bekommt. Der Nachteil in diesem Verfahren besteht darin, dass Vergütungen nur im Zusammenhang mit der Wahrnehmung einer Dienstleistung abrechenbar sind und dass das Rabattsystem ziemlich starr an die Präsenz einer Datenträgerkarte gekoppelt ist.

Es ist daher Aufgabe der Erfindung, ein Rabattsystem zu schaffen, welches es ermöglicht, das werberesponsive Verhalten der am Rabattsystem teilnehmenden Teilnehmer zu beeinflussen und in gewisser Weise das Kaufverhalten der am Rabattsystem teilnehmenden Teilnehmer im Hinblick auf die Produkte und Dienstleistungen von Containerpartnern zu beeinflussen.

Diese Aufgabe wird mit einem Verfahren des Anspruchs 1 gelöst. Vorteilhafte Weiterbildungen der Erfindung sind Gegenstand der Unteransprüche.

Basis des vorliegenden Rabattsystems ist ein rechnerbasiertes Zentralsystem, welches die Daten der Containerpartner und/oder der Teilnehmer verarbeitet, die an dem Rabattsystem teilnehmen. Hierbei wird jedem Teilnehmer im Zentralsystem eine Teilnehmerkennung und ein Teilnehmerkonto zugeordnet, das rabattrelevante Daten und persönliche Daten des Teilnehmers enthält. Die Datenübertragung zwischen den Teilnehmern, den Containerpartnern und dem Zentralsystem kann über herkömmliche Kommunikationsformen wie Kommunikationsleitungen oder Datenleitungen bzw. Funkübertragungsnetze und korrespondierende Kommunikationsplattformen wie zum Beispiel dem Internet stattfinden. Die Rabattzuteilung und Nutzung in dem erfindungsgemäßen Rabattsystem erfolgt auf folgende Weise:

Containerpartner des Rabattsystems bewerben ihre Dienstleistungen und/oder Produkte durch unterschiedliche Medien, wie zum Beispiel Printmedien, wie Plakatwerbung, Außenwerbung, Anzeigenwerbung in Zeitungen und Journalen, Wurfsendungen etc. Eine andere Form der Werbung wäre die Rundfunk- oder Fernsehwerbung oder die Werbung in Kommunikationsund Telekommunikationsmedien wie Internetwerbung, SMS-Werbung als auch Kinowerbung etc. Im Zusammenhang mit dieser Werbung gibt der Containerpartner einen insbesondere alphanumerischen Code an, der von dem Teilnehmer notiert und beispielsweise über sein Telefon, Mobiltelephon oder seinen Computer an das Zentralsystem übermittelt wird. Bei der Übermittlung werden Identifikationsdaten mitübersandt, die einen Rückschluss auf die Teilnehmerkennung des Teilnehmers zulassen. Derartige Daten können zum Beispiel die Anschlussnummer der Telekommunikationseinrichtung, die IP-Nummer des Computers oder auch die Teilnehmerkennung selbst sein. Der Rechner des Zentralsystems bucht daraufhin einen dem eingegebenen Code und/oder seinen individuellen Daten entsprechenden Rabatt auf sein Teilnehmerkonto. Durch ein entsprechend aufmerksames Verhalten des Teilnehmers bezüglich Werbung der Containerpartner kann somit die Aufnahmefähigkeit der Teilnehmer für die Werbung der Containerpartner beträchtlich gesteigert werden.

Die auf dem Teilnehmerkonto kumulierten Rabatte werden schließlich bei einer Transaktion des Teilnehmers mit einem Containerpartner, d.h. beim Kauf eines Produktes oder der Wahrnehmung einer Dienstleistung verrechnet, wobei im Laufe der Transaktion wiederum Identifikationsdaten des Teilnehmers an das Zentralsystems oder den Containerpartner übermittelt werden, die die entsprechende Verrechnung der auf dem Teilnehmerkonto befindliche Rabatte selektiv oder kumuliert zulassen. Die Transaktion kann dabei direkt mit dem Containerpartner stattfinden, in welchem Fall der Containerpartner während der Transaktion auf das Teilnehmerkonto des Zentralsystems zugreifen muss oder die entsprechenden auf einem Datenträger des Teilnehmers befindlichen Daten verändern muss, oder über das Zentralsystem selbst, wobei in diesem Fall vorzugsweise die gesamte Transaktion über das Zentralsystem abgewickelt wird und das Zentralsystem mit dem entsprechenden Containerpartner einen separaten Buchungssatz anlegt, der den auf dem Teilnehmerkonto befindlichen Rabatt berücksichtigt. In beiden Fällen kann der Rabatt auf dem Teilnehmerkonto nach erfolgter Transaktion entsprechend zurückgesetzt, heraufgesetzt oder unverändert belassen werden. Es kann z.B. vorgesehen sein, dass in Abhängigkeit von der Eingabe neuer Codes die Rabatthöhe auf dem Teilnehmerkonto, z.B. in Art eines Rabattsatzes auf einem hohen Niveau gehalten wird, das allein davon abhängt, wie viel und welche Codes in einer bestimmten Zeitspanne in das Zentralsystem eingegeben werden. Dieser Rabatt kann dann im Verlauf von Transaktionen unverändert belassen oder sogar erhöht werden. Hierdurch lässt sich erreichen, dass die Aufmerksamkeit des Teilnehmers bezüglich Werbung der Contäinerpartner auf einem gewissen Niveau gehalten wird, was mit einem entsprechenden Rabattsatz belohnt wird. Dieser Rabattsatz kann dann sogar erhöht werden, wenn der Teilnehmer Transaktionen z.B. mit einem Containerpartner direkt oder mittels des Zentralsystems vornimmt.

Das erfindungsgemäße Rabattsystem ist für die Containerpartner aus folgenden Gründen sehr interessant:
- die Aufmerksamkeit der Teilnehmer bezüglich Werbung der Containerpartner wird beträchtlich erhöht,
- durch die Erhöhung der Werbeakzeptanz der Containerpartner wird auch das Kaufverhalten der Teilnehmer hinsichtlich der von den Containerpartnern angebotenen Produkte oder Dienstleistungen verbessert,
- die Auswertung der von den Teilnehmern eingegebenen Codes ermöglicht dem System eine Rückmeldung über das Werbeverhalten der Teilnehmer, zum Beispiel welche Art der Werbung in welchem Umfang von den Teilnehmern wahrgenommen wird. Diese Verhaltensdaten des Endverbrauchers im Markt können den Containerpartnern wertvolle Rückschlüsse über die Gestaltung zukünftiger Werbung und Werbemaßnahmen geben;
- den Teilnehmern kann Werbung der Containerpartner in gezielter Weise dargebracht werden, die dem persönlichem Anforderungsprofil des entsprechenden Teilnehmers entspricht.

Für den Teilnehmer ergibt sich der Vorteil, dass er unter Steigerung seiner Aufmerksamkeit gegenüber unterschiedlichen Arten der Werbung sein Rabattkonto auf einen entsprechend positiven Wert bringen kann, was es ihm ermöglicht, auf Produkte oder Dienstleistungen der Containerpartner seinem Verhalten entsprechend mehr oder weniger großzügige Rabatte eingeräumt zu bekommen.

Die Transaktion, d.h. der Kauf eines Produktes und/oder die Wahrnehmung einer Dienstleistung kann von dem Teilnehmer beim Containerpartner selbst, d.h. in seinem Geschäft oder auf seiner Website erfolgen, oder vorzugsweise über ein Internet-Portal des Zentralsystems, in welchem die Produkte und/oder Dienstleistungen von Containerpartnern zum Kauf oder zur Nutzung angeboten werden. Die Containerpartner, die die Codes in der Werbung präsentieren, können aber müssen nicht zwangsläufig identisch mit den Containerpartnem sein, deren Waren oder Dienstleistungen der Teilnehmer später in einer Transaktion erwerben kann. Im Fall einer Transaktion über ein derartiges zentrales Internet-Portal besteht der Vorteil für den Teilnehmer darin, dass er keinerlei Datenträger oder dergleichen benötigt und dass die Gewährung der Rabatte selbsttätig allein aufgrund der Eingabe seiner Identifikationsdaten erfolgen kann. Für den Containerpartner ergibt sich der Vorteil, dass die Transaktion für viele unterschiedliche Endverbraucher gesammelt mit dem Zentralsystem abgerechnet werden kann, wobei sich dann der Containerpartner über die Rabattausweisung selbst nicht kümmern muss. Im Gegenteil kann der Containerpartner dann von den Zentralsystem Daten über das Werbeverhalten der Teilnehmer erhalten, insbesondere derjenigen Teilnehmer, die schließlich Transaktionen über das Zentralsystem abgeschlossen haben.

Die Höhe der Rabatte lässt sich auch bestimmen über das Vorhandensein von Daten in Datenfeldern des Teilnehmerkontos, die vom Teilnehmer auf freiwilliger Basis eingebbar sind. Derartige freiwillige Daten können zum Beispiel das individuelle Kaufverhalten oder bevorzugte Hobbies oder Interessen treffen. Derartige Daten sind vorzugsweise zur Erstellung eines klareren Verbraucherprofils nutzbar und deren Abgabe kann durch die Beeinflussung der Höhe des Rabattes angespornt werden.

Es gibt für den Teilnehmer mehrere unterschiedliche Möglichkeiten, die Daten an das Zentralsystem zu übermitteln. Vorzugsweise eignen sich hierfür Telekommunikationsverbindungen, die auch Mobiltelephone umfassen können. In diesem Fall wäre es ausreichend, dass der Teilnehmer lediglich den Code an das Zentralsystem übermittelt. Über die mitübermittelte Telefonnummer kann das Zentralsystem dann die Teilnehmerkennung und das zugeordnete Teilnehmerkonto erkennen. In gleicher Weise kann die Identifizierung des Teilnehmers über die IP-Adresse eines Rechners im Internet oder über Cookies erfolgen. Der Teilnehmer kann jedoch auch seine Teilnehmerkennung manuell eingeben.

Selbstverständlich muss sich der Teilnehmer vor der Wahrnehmung des Rabattsystems beim Rabattsystem anmelden. Dies kann auf unterschiedliche Weise, zum Beispiel über Internet, Telefon, SMS oder per Post erfolgen.

Weiterhin muss der Datentransfer mit der Rabattabrechnung und die Abrechnung von Transaktionen zwischen dem Zentralsystem und den Containerpartnern festgelegt sein, insbesondere wenn Transaktionen zentral über das Zentralsystem abgewickelt werden. Hierfür haben die Containerpartner vorzugsweise Rechner, die dauerhaft oder zuschaltbar mit dem Zentralsystem verbunden bzw. verbindbar sind. Die Datenübermittlung kann dabei während einer Transaktion als auch in einer Sammelübermittlung in festgelegten Perioden zum Beispiel Tagen, Wochen oder Monaten erfolgen.

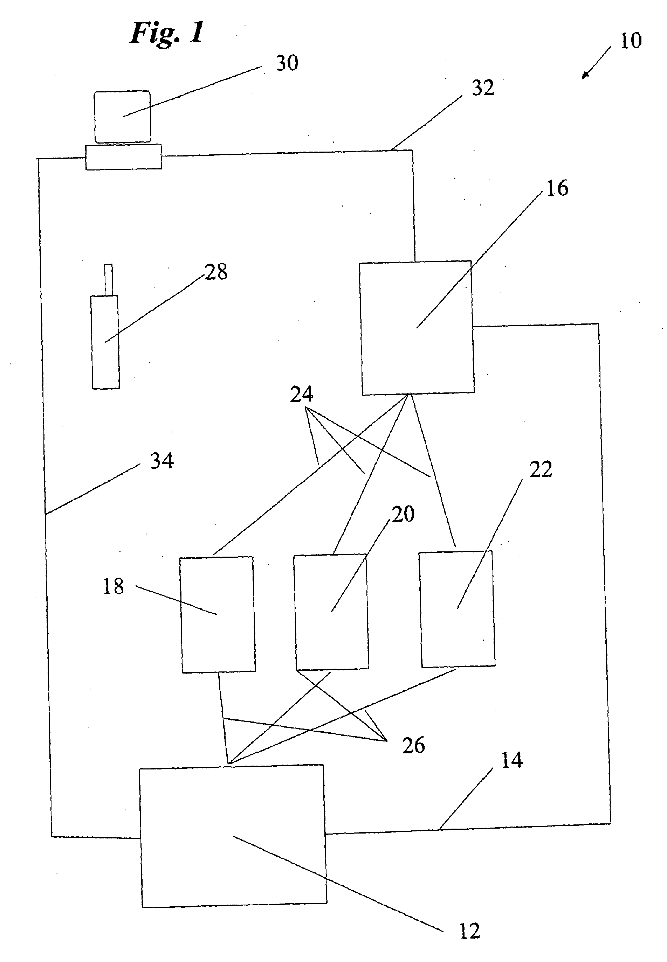

Eine Anlage zur Implementierung des erfindungsgemäßen Rabattsystems ist beispielsweise in der beiliegenden Zeichnung beschrieben, welche eine Verbindungskonfiguration zwischen Dateneingabe und Verarbeitungsgeräten der Teilnehmer, der Containerpartner und dem Zentralsystem zeigen.

Das Rabattsystem 10 umfasst einen Zentralrechner 12 eines Zentralsystems, welches den Datenverkehr mit den Teilnehmern und den Containerpartnern führt. Selbstverständlich muss es sich hierbei nicht um einen Rechner handeln, der alle Aufgaben wahrnimmt, sondern unterschiedliche Arten der Kommunikation oder die Kommunikation mit Teilnehmern und Containerpartnem kann auf unterschiedliche Datenverarbeitungsanlagen verteilt sein, wie dies an sich bekannt ist. Der Rechner 12 des Zentralsystems ist mit einer Leitung 14 mit dem Internet 16 verbunden. Mit diesem sind weiterhin die Server 18, 20, 22 unterschiedlicher Containerpartner über Leitungen 24 verbunden. Zusätzlich oder alternativ kann der Rechner 12 des Zentralsystems mit den Rechnern 18, 20, 22 der unterschiedlichen Containerpartner auch direkt über Telekommunikationsleitungen 26 verbunden sein. Der Teilnehmer kommuniziert mit dem Zentralrechner 12 entweder über ein Mobiltelephon 28 oder einen PC 30, der vorzugsweise über eine Leitung 32 mit dem Internet 16 verbunden ist oder alternativ bzw. zusätzlich auch über eine Kommunikationsleitung 34 direkt mit dem Zentralrechner 12 des Zentralsystems verbunden sein kann.

Das dargestellten System funktioniert wie folgt:

Der Teilnehmer am Rabattsystem erhält einen im Zusammenhang mit einer Werbung ausgewiesenen Code und gibt den über sein Mobiltelephon 28 oder seinen Personalcomputer 30 an den Zentralrechner 12. Dieser ist hierfür über eine entsprechende Kommunikationsleitung 34 mit dem Personalcomputer verbunden oder die Übermittlung dieser Daten findet über die Leitung 32 und 14 über das Internet 16 statt. Im Falle der Eingabe des Codes über ein Mobiltelephon 28 oder ein Festnetztelefon wird vorzugsweise die Teilnehmernummer des Gerätes zur Identifizierung des Teilnehmers verwendet und der Code wird vorzugsweise über die Tasten im Impuls- oder Mehrfrequenzverfahren eingegeben und ist damit direkt für den Zentralrechner 12 nutzbar. Es kann jedoch auch ein voicegesteuertes Callcenter vorgesehen sein, das über Spracherkennungsfunktionalität verfügt, so dass der Code auch mündlich eingegeben werden kann. Der Zentralrechner 12 verfügt über Speicher, in denen die Kontendaten der Teilnehmer verwaltet werden. Die Eingabe eines Codes wird automatisch über die Identifikationsdaten des Teilnehmers dem Teilnehmerkonto zugeordnet und in Abhängigkeit vom Code und/oder auch in Abhängigkeit von teilnehmerindividuellen Daten in Rabattpunkte in Form von realen oder virtuellen Zahlungseinheiten gebucht oder in Form der Veränderung eines Rabattsatzes, der für unterschiedliche Produkte/Dienstleistungen der Containerpartner auch unterschiedlich gehandhabt werden kann. Hierzu weist der Zentralrechner 12 vorzugsweise Recheneinheiten und Speicher auf, die die individuellen Rabattsätze für individuelle Teilnehmer und Containerpartner ermöglicht.

Die Gutschrift der Rabattpunkte bzw. Nutzung des Rabattsatzes erfolgt im Rahmen einer Transaktion, die der Teilnehmer mit einem Containerpartner abschließt. Hierfür kann der Teilnehmer zum Beispiel mittels seines PCs 30 über Internet 16 mit den entsprechenden Containerpartnern 18, 20, 22 verbunden sein und dort online die Transaktion abwickeln oder die Transaktion wird online abgewickelt über ein Einkaufsportal im Internet 16, das durch den Zentralrechner 12 bzw. einen separaten Rechner des Zentralrechners 12 gehandhabt wird. In letzterem Fall wird bei einer Transaktion automatisch der Teilnehmer-/Code- und Containerpartner-spezifische Rabattsatz errechnet und dem Teilnehmer beim Kauf mitgeteilt, so dass der Teilnehmer eine direkte Rückkopplung über die Vergünstigungen in Zusammenhang mit dem Rabattsystem erhält, was ihn zu einer verstärkten Nutzung des Rabattsystems veranlasst. Anschließend werden die Containerpartner 18, 20, 22 über direkte Kommunikationsleitungen 26 oder über Internet 16 über eine abgeschlossene Transaktion mit einem Teilnehmer informiert, was nach jeder individuellen Transaktion oder auch gesammelt für eine Vielzahl von Transaktionen erfolgen kann, was wiederum die Handhabung für die Containerpartner erleichtert.

Mit einer Transaktion kann der Rabatt aufgebraucht werden, wenn er in Form von virtuellen oder realen Einheiten gewährt wird oder verändert werden, wenn er in Form eines prozentualen Rabatts gehandhabt wird. In letzterem Fall kann der Rabattsatz sogar mit erfolgter Transaktion erhöht werden.

Es ist selbstverständlich , dass unterschiedliche Datenverarbeitungseinheiten des Systems nicht räumlich integriert sondern an verschiedenen Orten angeordnet werden können, wobei zur Verbindung alle herkömmlichen Kommunikationsformen verwendet werden können.

## Patentansprüche

1. Verfahren zur Auskehrung von Rabatten an Verbraucher (Rabattsystem), welches Rabattsystem Containerpartner umfasst, die Produkte/Dienstleistungen bewerben und/oder Rabatte auf Ihre Produkte/Dienstleistungen auskehren, und Teilnehmer, welche als Verbraucher die im Rabattsystem ausgekehrten Rabatte nutzen, unter Nutzung eines Zentralsystems mit einem Rechner zur Verarbeitung von Daten, die den Containerpartnern und/oder Teilnehmern am Rabattsystem zugeordnet sind, wobei für jeden Teilnehmer im Zentralsystem eine Teilnehmerkennung zugewiesen wird, der ein Teilnehmerkonto mit rabattrelevanten Daten zugeordnet ist,
unter Nutzung wenigstens eines Datenübertragungssystems zwischen dem Zentralsystem und den Teilnehmern und/oder den Containerpartnern, online oder offline, z.B. mittels Datenträgern, wobei
- Containerpartner in Zusammenhang mit der Präsentation von Werbung einen Code ausweisen,
- der Teilnehmer den Code zusammen mit Identifikationsdaten, die einen Rückschluss über seine Teilnehmerkennung zulassen, mittels eines Datenübertragungssystems, z.B. einer Telekommunikationseinrichtung an das Zentralsystem übermittelt,
- das Zentralsystem auf das Teilnehmerkonto einen dem Code zugewiesenen und/oder teilnehmerspezifischen Rabatt bucht,
- der Teilnehmer bei einer Transaktion, d.h. beim Kauf eines Produkts eines Containerpartners und/oder bei der Wahrnehmung einer Dienstleistung eines Containerpartners an den betreffenden Containerpartner oder an das Zentralsystem Identifikationsdaten übermittelt, die einen Rückschluss auf seine Teilnehmerkennung zulassen, woraufhin der auf dem Teilnehmerkonto ausgewiesene Rabatt verrechnet und gegebenenfalls die Kontodaten verändert werden..

2. Verfahren nach Anspruch 1, **dadurch gekennzeichnet, dass** die Verrechnung der Rabatte über ein kommunikationsbasiertes Portal, insbesondere Internet-Portal erfolgt, in dem Produkte und/oder Dienstleistungen wenigstens eines der Containerpartner zum Kauf/ zur Nutzung angeboten werden.

3. Verfahren nach Anspruch 1 oder 2, **dadurch gekennzeichnet, dass** jedes Teilnehmerkonto über eine Reihe an Datenfeldern verfügt, deren Eingabe seitens der Teilnehmer auf freiwilliger Basis erfolgt, und dass das Zentralsystem ein Rechensystem aufweist, das die Höhe der für den Teilnehmer ausgekehrten Rabatte in Abhängigkeit davon festlegt, ob diese Datenfelder Daten enthalten oder nicht.

4. Verfahren nach einem der vorhergehenden Ansprüche, **dadurch gekennzeichnet, dass** der Code in Zusammenhang mit Printwerbung, z.B. Plakat- oder Bandenwerbung präsentiert wird.

5. Verfahren nach einem der Ansprüche 1 bis 3, **dadurch gekennzeichnet, dass** der Code in Zusammenhang mit Werbung in Funkmedien, wie z.B. Rundfunk oder Fernsehen präsentiert wird.

6. Verfahren nach einem der Ansprüche 1 bis 3, **dadurch gekennzeichnet, dass** der Code in Zusammenhang mit Werbung in Kommunikationsmedien wir z.B. SMS oder Internet präsentiert wird.

7. Verfahren nach einem der vorhergehenden Ansprüche, **dadurch gekennzeichnet, dass** der Teilnehmer mittels eines Datenübertragungssystems z.B. via Internet oder Telekommunikation unter Übermittlung von Identifikationsdaten, die einen Rückschluss über seine Teilnehmerkennung zulassen, auf sein Konto, z.B. zur Kontostandsabfrage, zugreifen kann.

8. Verfahren nach einem der vorhergehenden Ansprüche, **dadurch gekennzeichnet, dass** sich jeder Teilnehmer vor der Nutzung des Rabattsystems beim Zentralsystem unter Angabe persönlicher Daten anmelden muss

9. Verfahren nach einem der vorhergehenden Ansprüche, **dadurch gekennzeichnet, dass** in Verbindung mit einer Transaktion kontospezifische Daten des Teilnehmers des Zentralsystems entweder online oder über einen Datenträger an den an der Transaktion beteiligten Containerpartner übermittelt werden, und dass der Containerpartner in Verbindung mit der Transaktion einen Datensatz an das Zentralsystem übermittelt, durch den zumindest die Kontodaten verändert werden.

10. Verfahren nach einem der Ansprüche 1 bis 8, **dadurch gekennzeichnet, dass** Transaktionen der Teilnehmer mit Containerpartnern über das Zentralsystem abgewickelt werden, und das Zentralsystem den betroffenen Containerpartnern Daten über die mit den Teilnehmern abgeschlossenen Transaktionen übermittelt.

11. Verfahren nach einem der vorhergehenden Ansprüche, **dadurch gekennzeichnet, dass** die Containerpartner über Rechner verfügen, die über ein Datenübertragungssystem mit dem Zentralsystem verbindbar sind.
